# EUROPEAN PATENT APPLICATION

(11) **EP 4 757 048 A1**
(43) Date of publication of application: **10.06.2026**
(21) Application number: 25213845.8
(22) Date of filing: 06.11.2025
(51) Int. Cl.: H01M 50/533, H01M 50/536, B23K 20/10

(54) **POWER STORAGE DEVICE AND METHOD OF MANUFACTURING SAME**

(30) Priority: 04.12.2024 JP 2024211640
(71) Applicant: Prime Planet Energy & Solutions, Inc., Tokyo 103-0022 (JP)
(72) Inventor: SAKASHITA, Shungo, Tokyo 103-0022 (JP)
(74) Representative: Kuhnen & Wacker Patent- und Rechtsanwaltsbüro PartG mbB

(57) **Abstract**

A method of manufacturing a power storage device includes: producing an electrode assembly (200) having a first electrode tab group (220); and forming a joining portion at which first electrode tabs (230) in the first electrode tab group (220) are joined together by applying vibration to the first electrode tab group (220) by a horn (10) in a state in which the first electrode tab group (220) is sandwiched between the horn (10) and an anvil (20) in a stacking direction of the first electrode tabs (230), wherein a line-shaped protuberance (11) is provided in a surface of one of the horn (10) and the anvil (20), the surface being to be in abutment with a first outer surface of the first electrode tab group (220), and in the forming the joining portion, the vibration is applied in a state in which the line-shaped protuberance (11) is in abutment with the first outer surface of the first electrode tab group (220).

## Description

### CROSS REFERENCE TO RELATED APPLICATIONS

This nonprovisional application is based on Japanese Patent Application No. 2024-211640 filed on December 4, 2024 with the Japan Patent Office, the entire contents of which are hereby incorporated by reference.

### BACKGROUND OF THE INVENTION

### Field of the Invention

The present technology relates to a power storage device and a method of manufacturing the power storage device.

### Description of the Background Art

Japanese Patent Laying-Open No. 2021-515957 discloses a method of manufacturing a secondary battery, wherein an electrode tab is located between a horn and an anvil for ultrasonic welding and the ultrasonic welding is performed to form an electrode tab bundle.

### SUMMARY OF THE INVENTION

In a power storage device, a conductive connection portion is formed. It is required to improve reliability of the conductive connection portion. From this viewpoint, there is still room for improvement in the battery described in Japanese Patent Laying-Open No. 2021-515957.

An object of the present technology is to provide a power storage device having high reliability and a method of manufacturing the power storage device.

The present technology provides the following power storage device and the following method of manufacturing the power storage device.
[1] A method of manufacturing a power storage device, the power storage device including an electrode assembly including a first electrode and a second electrode, the electrode assembly having a first electrode tab group in which a plurality of first electrode tabs each connected to the first electrode are stacked, the method comprising: producing the electrode assembly having the first electrode tab group; and forming a joining portion at which the first electrode tabs in the first electrode tab group are joined together by applying vibration to the first electrode tab group by a horn in a state in which the first electrode tab group is sandwiched between the horn and an anvil in a stacking direction of the first electrode tabs, wherein a line-shaped protuberance is provided in a surface of one of the horn and the anvil, the surface being to be in abutment with a first outer surface of the first electrode tab group, and in the forming the joining portion, the vibration is applied in a state in which the line-shaped protuberance is in abutment with the first outer surface of the first electrode tab group.
[2] The method of manufacturing the power storage device according to [1], wherein the line-shaped protuberance is provided in the horn.
[3] The method of manufacturing the power storage device according to [1] or [2], wherein in the forming the joining portion, the horn is vibrated in a direction intersecting a direction in which the line-shaped protuberance extends.
[4] The method of manufacturing the power storage device according to any one of [1] to [3], wherein the line-shaped protuberance includes a plurality of protuberances extending in substantially the same direction.
[5] The method of manufacturing the power storage device according to any one of [1] to [4], wherein the joining portion includes a first joining region formed in a region with which the line-shaped protuberance is to be in abutment, and a second joining region formed around the first joining region.
[6] The method of manufacturing the power storage device according to any one of [1] to [5], wherein the forming the joining portion includes forming a first recess and a second recess in the first outer surface of the first electrode tab group, and the first recess is a pressing mark resulting from the line-shaped protuberance, and the first recess is formed in a bottom portion of the second recess.
[7] The method of manufacturing the power storage device according to any one of [1] to [6], further comprising: after the forming the joining portion, joining the joining portion in the first electrode tab group and a first conductive member to each other.
[8] The method of manufacturing the power storage device according to [7], wherein the first electrode tab group has a second outer surface located opposite to the first outer surface, and the joining portion in the first electrode tab group and the first conductive member are joined to each other by applying an energy ray from the first outer surface side to the joining portion in a state in which the first conductive member is in abutment with the second outer surface.
[9] The method of manufacturing the power storage device according to [8], wherein the energy ray is scanned in a direction intersecting a direction in which a pressing mark resulting from the line-shaped protuberance extends.
[10] A power storage device comprising: an electrode assembly including a first electrode and a second electrode; and a first conductive member electrically connected to the electrode assembly, wherein the electrode assembly includes a first electrode tab group in which a plurality of first electrode tabs each connected to the first electrode are stacked, the first electrode tab group includes a first outer surface and a second outer surface located opposite to each other, a first recess having a line shape is formed in the first outer surface, the first conductive member is joined to the second outer surface, the first electrode tab group has a joining portion at which the first electrode tabs are joined together, and the first recess is formed in the joining portion.
[11] The power storage device according to [10], wherein a plurality of the first recesses are formed to extend in substantially the same direction.
[12] The power storage device according to [10] or [11], wherein the joining portion includes a first joining region in which the first recess is formed, and a second joining region formed around the first joining region.
[13] The power storage device according to any one of [10] to [12], wherein a second recess is formed in the first outer surface of the first electrode tab group, and the first recess is formed in a bottom portion of the second recess.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to an embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a flowchart showing a method of manufacturing the secondary battery according to one embodiment.
Fig. 14 is a perspective view showing a state before two electrode assemblies included in the secondary battery according to one embodiment are overlapped with each other.
Fig. 15 is a cross sectional view of each of electrode assemblies and current collectors shown in Fig. 14 along XV-XV.
Fig. 16 is a perspective view showing a state of attaching a holder and a spacer to the electrode assembly.
Fig. 17 is a perspective view showing a state of attaching a sealing plate to the current collectors on the negative electrode side.
Fig. 18 is a cross sectional view of each of the electrode assemblies and the current collectors shown in Fig. 17 along XVIII-XVIII.
Fig. 19 is a perspective view showing a state of attaching a sealing plate to the current collector on the positive electrode side.
Fig. 20 is a perspective view showing the configuration of the secondary battery.
Fig. 21 is a diagram showing a step of joining electrode tabs together using a horn and an anvil.
Fig. 22 is a diagram showing an exemplary arrangement of the horn in the step of joining the electrode tabs together.
Fig. 23 is a plan view of the horn.
Fig. 24 is a perspective view of the horn.
Fig. 25 is a plan view showing an arrangement of the horn at a joining portion. Fig. 26 is a plan view showing an arrangement of the anvil at the joining portion.
Fig. 27 is a diagram showing an electrode tab group in which the electrode tabs are joined together by the horn and the anvil.
Fig. 28 is a diagram showing a periphery of the joining portion in the electrode tab group.
Fig. 29 is a cross sectional view along XXIX-XXIX in Fig. 28.
Fig. 30 is a cross sectional view along XXX-XXX in Fig. 28.
Fig. 31 is a cross sectional view showing a modification of the joining portion.
Fig. 32 is a first diagram showing an exemplary cross sectional shape of a line-shaped protuberance in the horn.
Fig. 33 is a second diagram showing an exemplary cross sectional shape of the line-shaped protuberance in the horn.
Fig. 34 is a third diagram showing an exemplary cross sectional shape of the line-shaped protuberance in the horn.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

Moreover, sizes such as width, length, and diameter of each member illustrated in the present specification are not limited to those shown in the figures, and can be appropriately changed. In the present specification, ordinal numbers such as "first" and "second" may be given to respective configurations, but these ordinal numbers do not limit priority, order, or the like unless explicitly defined.

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

In the present specification, when the terms "power storage device", "power storage cell", or "power storage module" is used, the "power storage device", the "power storage cell", or the "power storage module" is not limited to a battery, a battery cell or a battery module, and may include a capacitor, a capacitor cell, or a capacitor module.

The "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

In the present specification, the X direction may be referred to as a "width direction" of each of the secondary battery, the electrode assembly, and the case main body, the Z direction may be referred to as a "height direction" of the secondary battery or the case main body, and the Y direction may be referred to as a "thickness direction" of the secondary battery or the case main body.

### (Overall Configuration of Secondary Battery)

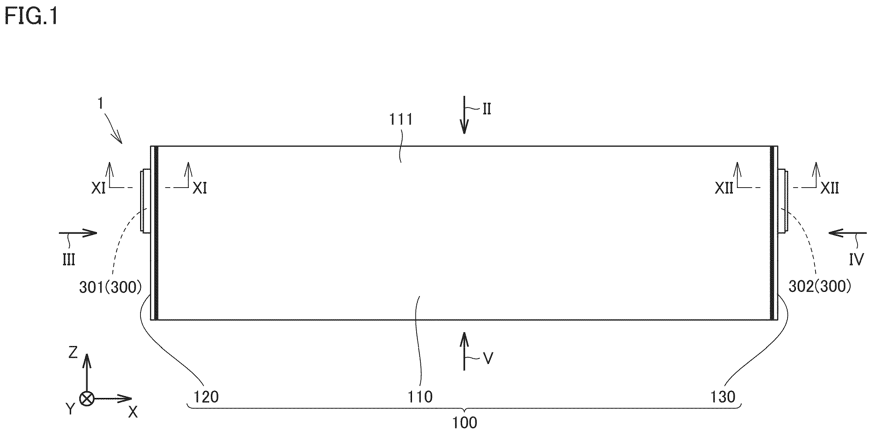

The overall configuration of secondary battery 1 will be described with reference to Figs. 1 to 6. Secondary battery 1 includes a case 100, an electrode assembly 200, electrode terminals 300, and current collectors 400. Case 100 includes a case main body 110, a sealing plate 120, and a sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

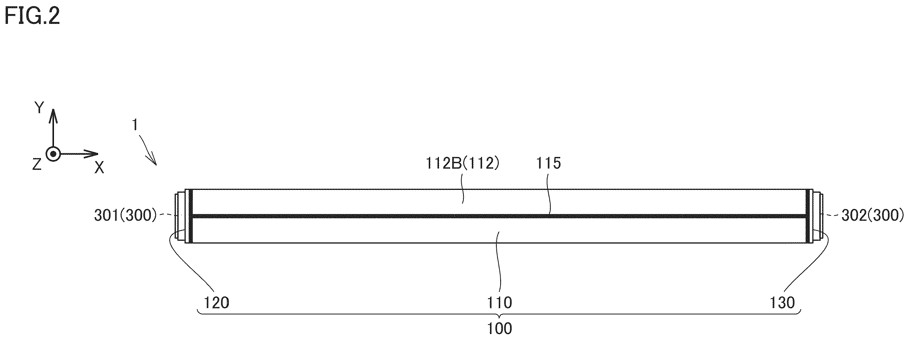

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, energy ray application such as laser welding is favorable). Each of the corners of the "prismatic tubular shape" may have a shape with a curvature. The secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

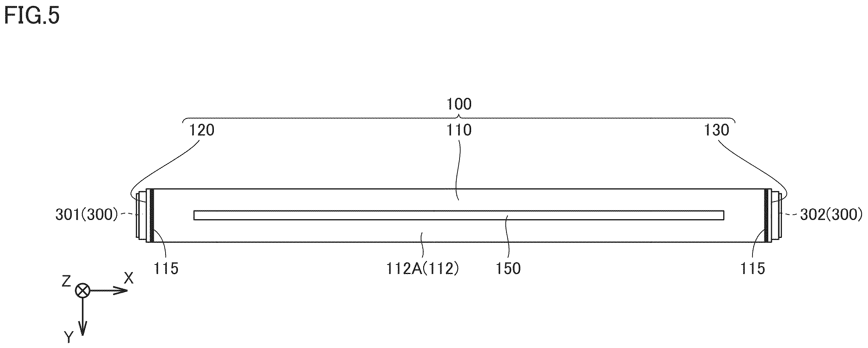

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

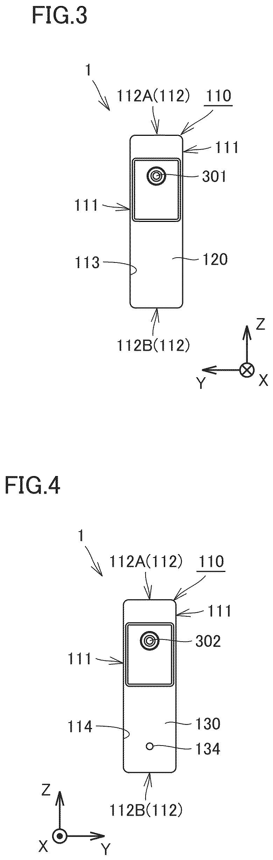

As shown in Fig. 3, an opening 113 (first opening) is provided at an end portion of case main body 110 on one side in the first direction (X direction). Opening 113 is sealed by sealing plate 120 (first sealing plate). Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

A negative electrode terminal 301 (first electrode terminal) is provided on sealing plate 120. The position of negative electrode terminal 301 can be appropriately changed.

As shown in Fig. 4, an opening 114 (second opening) is provided at an end portion of case main body 110 on the other side opposite to the first side in the X direction. That is, opening 114 is located at an end portion opposite to opening 113, and openings 113 and 114 face each other. Opening 114 is sealed by sealing plate 130 (second sealing plate). Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 is provided with a positive electrode terminal 302 (second electrode terminal) and an injection hole 134. Injection hole 134 may have a size with which an electrolyte solution can be injected into case 100, and is desirably smaller than a hole used for insertion of positive electrode terminal 302 and provided in sealing plate 130. Injection hole 134 is desirably disposed to be deviated from the center of sealing plate 130 in the Z direction. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 is electrically connected to a negative electrode (first electrode) of electrode assembly 200. Negative electrode terminal 301 is attached to sealing plate 120, i.e., case 100.

Positive electrode terminal 302 is electrically connected to a positive electrode (second electrode) of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described negative electrode plate and a below-described positive electrode plate stacked on each other. Specifically, electrode assembly 200 is a stacked type electrode assembly in which a plurality of negative electrode plates and a plurality of positive electrode plates are alternately stacked with a separator being interposed therebetween. The separator may be formed by folding a strip-shaped insulating sheet member in a meandering manner, or may be formed by individually providing a plurality of divided insulating sheets. In the present specification, the "electrode assembly" is not limited to the stacked type electrode assembly, and may be a wound type electrode assembly in which a strip-shaped negative electrode plate and a strip-shaped positive electrode plate are wound together with a strip-shaped separator being interposed therebetween. The separator can be constituted of, for example, a microporous membrane composed of polyolefin. When the electrode assembly is the stacked type electrode assembly including the plurality of negative electrode plates and the plurality of positive electrode plates, negative electrode tabs (first electrode tabs) provided on the negative electrode plates may be stacked to form a negative electrode tab group, and positive electrode tabs (second electrode tabs) provided on the positive electrode plates may be stacked to form a positive electrode tab group.

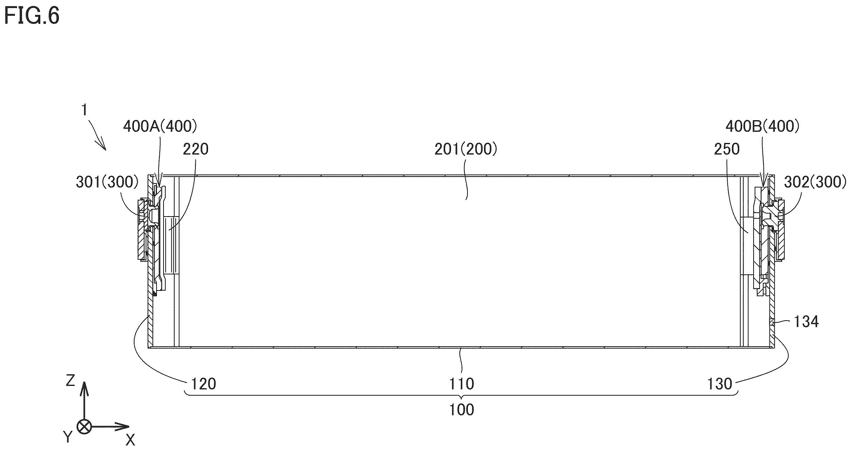

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and the electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

Electrode assembly 200 includes first electrode assembly 201. First electrode assembly 201 includes a main body portion having a substantially rectangular shape, a negative electrode tab group 220, and a positive electrode tab group 250.

The main body portion is constituted of a below-described negative electrode plate 210 and a below-described positive electrode plate 240. Negative electrode tab group 220 is located at an end portion of first electrode assembly 201 on one side (the sealing plate 120 side) with respect to the main body portion thereof in the X direction. Positive electrode tab group 250 is located at an end portion of first electrode assembly 201 on the other side (the sealing plate 130 side) with respect to the main body portion thereof in the X direction.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

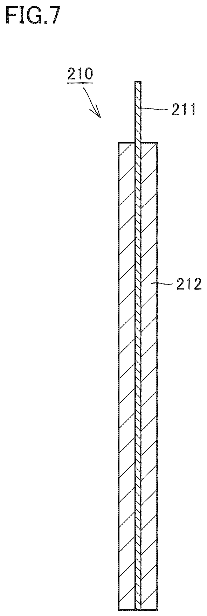

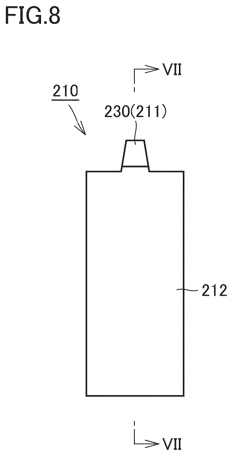

As shown in Figs. 7 and 8, a negative electrode tab 230 constituted of a negative electrode core body 211 is provided at one end portion of negative electrode plate 210 in the width direction. When negative electrode plates 210 are stacked, a plurality of negative electrode tabs 230 are stacked to form negative electrode tab group 220. Negative electrode tab group 220 is electrically connected to the negative electrode. The length of each of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 8.

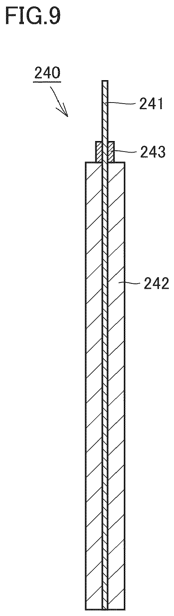

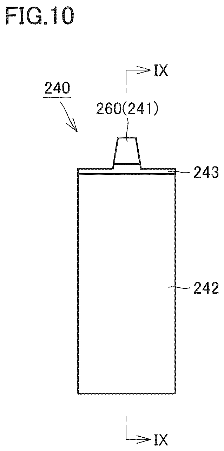

As shown in Figs. 9 and 10, a positive electrode tab 260 constituted of a positive electrode core body 241 is provided at one end portion of positive electrode plate 240 in the width direction. When positive electrode plates 240 are stacked, a plurality of positive electrode tabs 260 are stacked to form positive electrode tab group 250. Positive electrode tab group 250 is electrically connected to the positive electrode. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

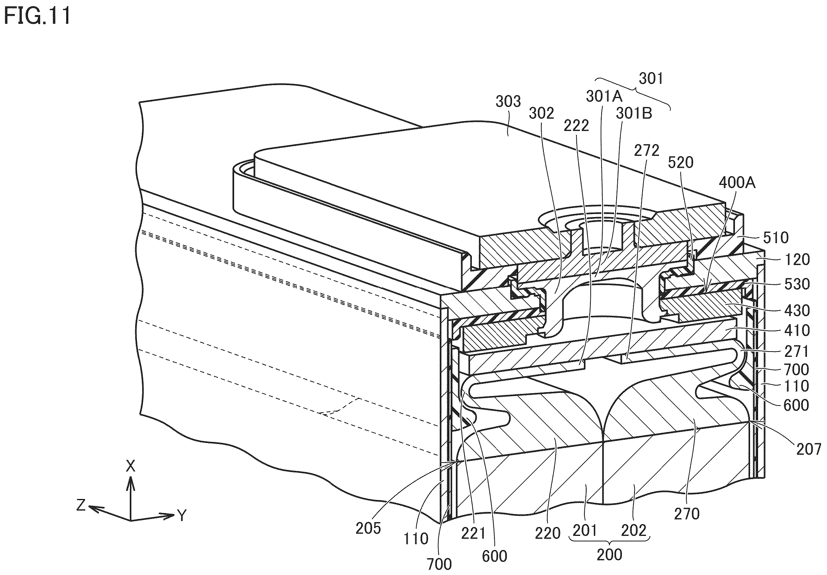

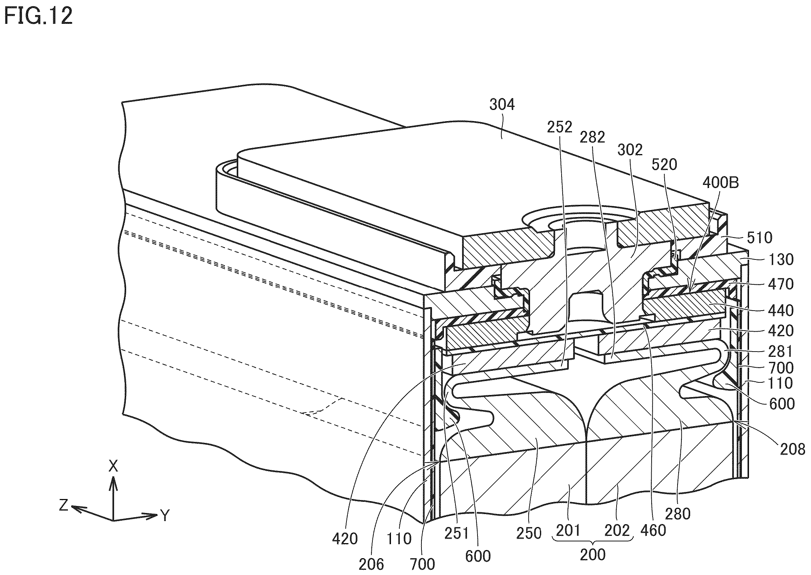

A connection structure between electrode assembly 200 and current collector 400 will be described with reference to Figs. 11 and 12.

As shown in Figs. 11 and 12, electrode assembly 200 includes a first electrode assembly 201 and a second electrode assembly 202. Each of first electrode assembly 201 and second electrode assembly 202 includes a positive electrode and a negative electrode. Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

As shown in Fig. 11 (connection structure on the negative electrode side), first electrode assembly 201 includes negative electrode tab group 220. Negative electrode tab group 220 is electrically connected to a current collector 410 (negative electrode current collector) at its first end portion 205 in the X direction. Second electrode assembly 202 includes a negative electrode tab group 270. Negative electrode tab group 270 is electrically connected to current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved. Tip portion 222 is a portion of negative electrode tab group 220 located at its end portion.

Negative electrode tab group 270 has a curved portion 271 and a tip portion 272. Curved portion 271 is a portion at which negative electrode tab group 270 is curved. Tip portion 272 is a portion of negative electrode tab group 270 located at its end portion.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120. Negative electrode current collector 400A includes current collector 410 and a current collector 430.

Current collector 410 is a plate-shaped member. Current collector 410 has a long-side direction in the Z direction and a short-side direction in the Y direction. Current collector 410 is constituted of a single component in one piece. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

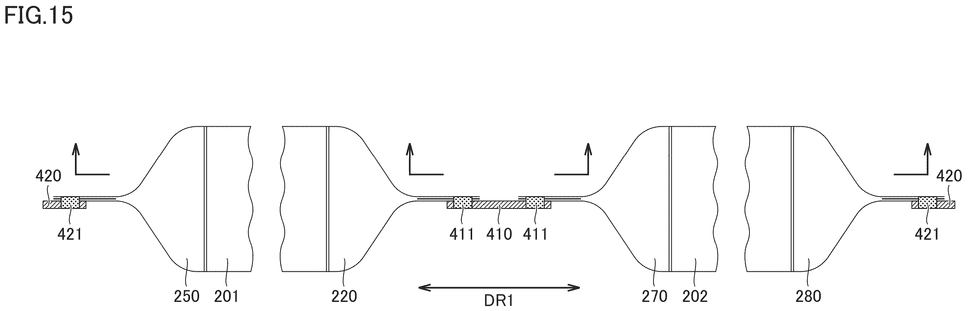

Negative electrode tab groups 220, 270 are joined to current collector 410 at joining locations 411 (see Fig. 15) described later. Each of joining locations 411 can be formed by laser welding or the like, for example.

Current collector 430 is joined to current collector 410 at a joining location located at its end portion in the Z direction. Current collector 430 is connected to negative electrode terminal 301. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303.
Negative electrode terminal 301 preferably includes a region 301A composed of copper or a copper alloy and a region 301B composed of aluminum or an aluminum alloy, and region 301A composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Sealing plate 120 may function as negative electrode terminal 301.

A spacer 600 is disposed between sealing plate 120 and the main body portion (negative electrode tab groups 220, 270 are not included) of electrode assembly 200. Spacer 600 is composed of a resin member having an insulating property. Spacer 600 suppresses movement of electrode assembly 200 in case 100 in the X direction to suppress damages of negative electrode tab group 220, negative electrode tab group 270, electrode assembly 200, and the like.

As shown in Fig. 12 (connection structure on the positive electrode side), the connection structure between electrode assembly 200 and current collector 400 on the positive electrode side is different from that of the configuration on the negative electrode side in the following point: a portion corresponding to current collector 410 on the negative electrode side is constituted of two components.

First electrode assembly 201 includes positive electrode tab group 250. Positive electrode tab group 250 is electrically connected to a current collector 420 (positive electrode current collector) at its second end portion 206 in the X direction. Second electrode assembly 202 includes a positive electrode tab group 280. Positive electrode tab group 280 is electrically connected to current collector 420 at its fourth end portion 208 in the X direction.

Positive electrode tab group 250 has a curved portion 251 and a tip portion 252. Curved portion 251 is a portion at which positive electrode tab group 250 is curved. Tip portion 252 is a portion of positive electrode tab group 250 located at its end portion.

Positive electrode tab group 280 has a curved portion 281 and a tip portion 282. Curved portion 281 is a portion at which positive electrode tab group 280 is curved. Tip portion 282 is a portion of positive electrode tab group 280 located at its end portion.

Positive electrode tab group 250 and positive electrode tab group 280 are curved in opposite directions such that tip portions 252, 282 are close to each other. Tip portions 252, 272 are separated from each other in the present embodiment; however, it is not limited to this configuration, and tip portions 252, 282 may be in contact with each other.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 and a current collector 440. Although an insulating member 460 is interposed between current collector 420 and current collector 440, current collector 420 and current collector 440 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of one current collector and the other current collector. That is, current collector 420 is constituted of two components.

Positive electrode tab group 250 and positive electrode tab group 280 are joined, at below-described joining locations 421 (see Fig. 15), to current collector 420 constituted of the two components. Each of joining locations 421 can be formed by laser welding or the like, for example.

Current collector 440 is joined to current collector 420 at a joining location located at its end portion in the Z direction. Current collector 440 is connected to positive electrode terminal 302. The connection between current collector 440 and positive electrode terminal 302 may be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 can be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Sealing plate 130 may function as positive electrode terminal 302.

A spacer 600 is disposed between sealing plate 130 and the main body portion (positive electrode tab groups 250, 280 are not included) of electrode assembly 200. Spacer 600 is composed of a resin member having an insulating property. Spacer 600 suppresses movement of electrode assembly 200 in case 100 in the X direction to suppress damages of positive electrode tab groups 250, 280, electrode assembly 200, and the like.

Spacer 600 shown in each of Figs. 11 and 12 is composed of a resin, for example. Examples of the material of spacer 600 includes polypropylene (PP), polyphenylene sulfide (PPS), polybutylene terephthalate (PBT), ethylene-propylene-diene rubber (EPDM), and the like.

As shown in Figs. 11 and 12, insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

### (Manufacturing Process for Secondary Battery 1)

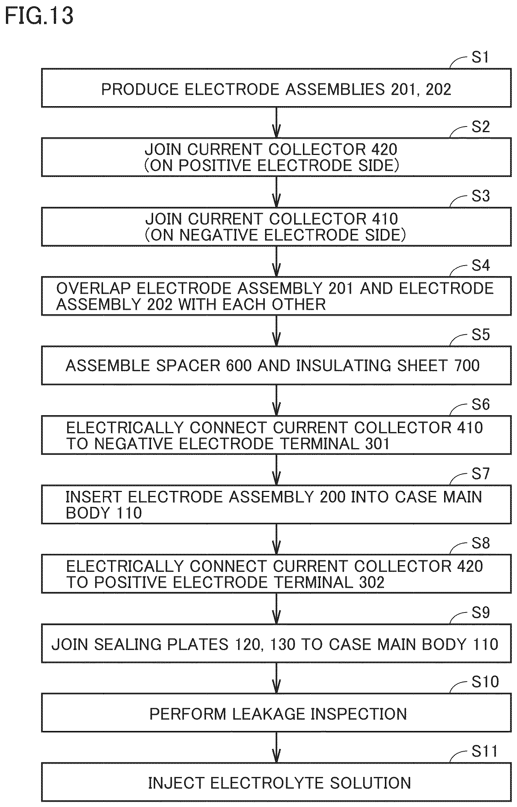

Hereinafter, a method of manufacturing the secondary battery according to the present embodiment will be described with reference to the flowchart of Fig. 13. In the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

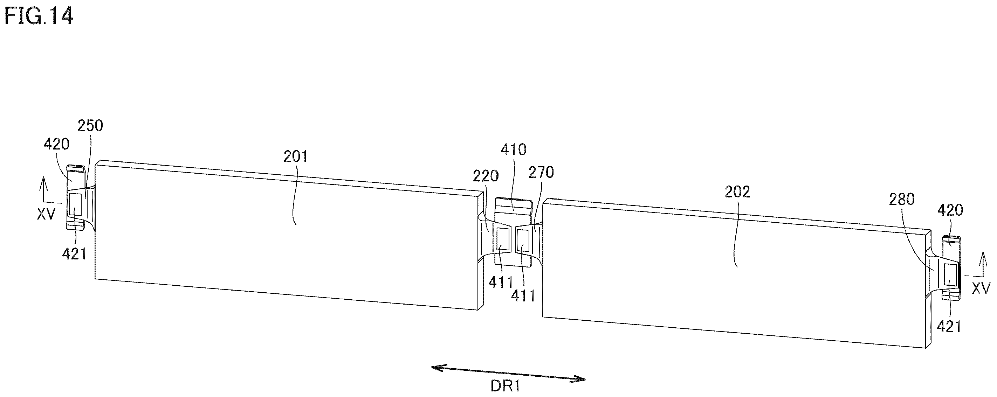

As shown in Figs. 14 and 15, after producing first electrode assembly 201 and second electrode assembly 202, each of positive electrode tab groups 250, 280 is joined to current collector 420 (step S2). Each of positive electrode tab groups 250, 280 is joined to current collector 420 at joining location 421.

Next, first electrode assembly 201, current collector 410, and second electrode assembly 202 are disposed side by side in this order in a DR1 direction. Negative electrode tab group 220 is disposed on one side with respect to current collector 410 in the DR1 direction. Negative electrode tab group 220 and negative electrode tab group 270 are joined to current collector 410 with negative electrode tab group 270 being disposed on the other side with respect to current collector 410 in the DR1 direction (step S3). Negative electrode tab group 220 and negative electrode tab group 270 are joined to current collector 410 at joining locations 411.

In the height direction of each of first electrode assembly 201 and second electrode assembly 202, each of current collector 410 and current collector 420 is disposed on one side with respect to the center of each of first electrode assembly 201 and second electrode assembly 202. Thus, each of the current collectors can be formed to be short, thereby reducing the size of the current collector. Each of current collector 410 and current collector 420 is not limited to this configuration. In the height direction of each of first electrode assembly 201 and second electrode assembly 202, each of current collector 410 and current collector 420 may be disposed at the center of a corresponding one of first electrode assembly 201 and second electrode assembly 202.

The order of the steps of joining current collector 410 and current collector 420 to first electrode assembly 201 and second electrode assembly 202 is not limited to the one described above, and the order may be changed. The step of joining current collector 420 to each of first electrode assembly 201 and second electrode assembly 202 is preferably performed before the below-described step of overlapping first electrode assembly 201 and second electrode assembly 202 with each other, and is preferably performed before the step of joining current collector 410 to first electrode assembly 201 and second electrode assembly 202.

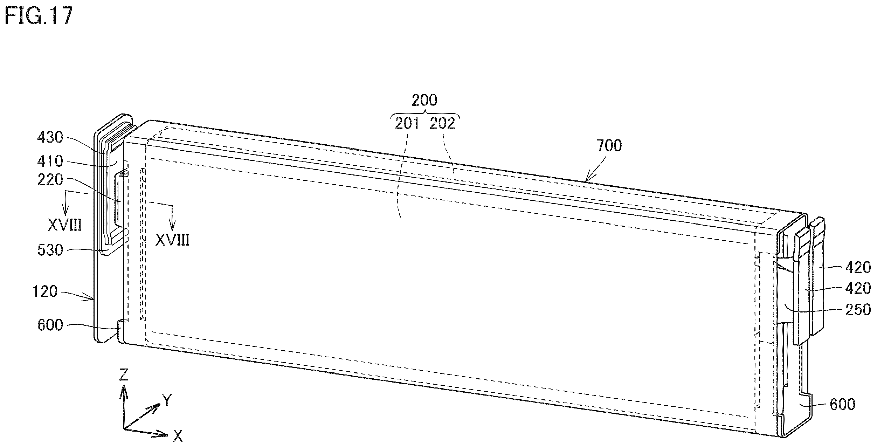

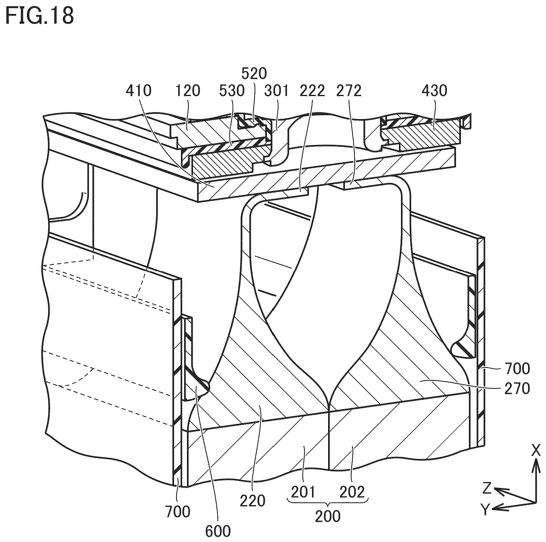

Next, after joining negative electrode tab group 220 and negative electrode tab group 270 to current collector 410, negative electrode tab group 220 and negative electrode tab group 270 are bent in the thickness direction (direction orthogonal to the DR1 direction in Figs. 17 and 18) of each of first electrode assembly 201 and second electrode assembly 202, thereby overlapping first electrode assembly 201 and second electrode assembly 202 with each other (step S4). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. The first electrode assembly and the second electrode assembly may or may not be fixed by a tape or the like. Further, the first electrode assembly, the current collector, and the second electrode assembly may not be disposed on a straight line in the DR1 direction, and the first electrode assembly or the second electrode assembly may be inclined with respect to the current collector in the DR1 direction.

Negative electrode tab group 220 and negative electrode tab group 270 are folded such that the tip portions thereof face each other. Positive electrode tab group 250 and positive electrode tab group 280 are also folded such that the tip portions thereof face each other.

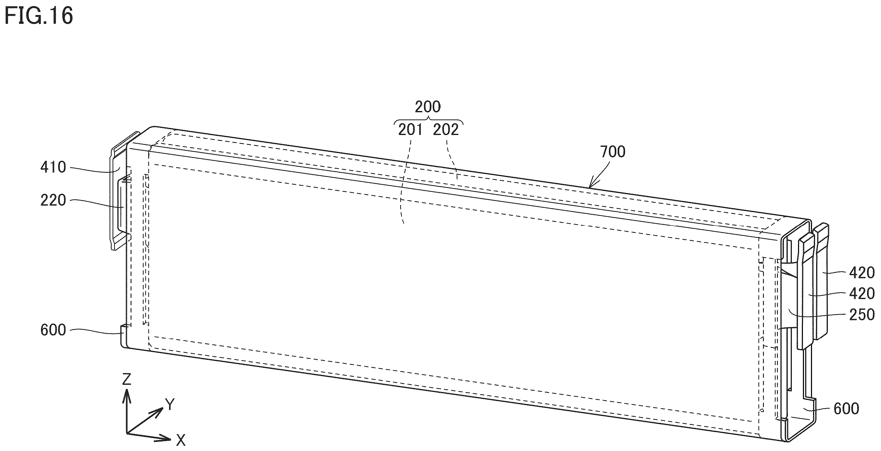

Next, as shown in Fig. 16, spacers 600 and insulating sheet 700 are assembled to electrode assembly 200 (step S5). After spacers 600 are assembled to electrode assembly 200 on the negative electrode side and the positive electrode side, electrode assembly 200 and spacers 600 on the both sides are covered with insulating sheet 700. Thus, electrode assembly 200 and spacers 600 on the both sides are covered with insulating sheet 700 with spacers 600 being disposed on the both sides with respect to electrode assembly 200. Insulating sheet 700 is fixed to spacers 600 on the both sides.

Next, as shown in Figs. 17 and 18, current collector 410 is electrically connected to negative electrode terminal 301 with current collector 430 being interposed therebetween (step S6). Step S6 can be performed before step S5. Specifically, as shown in Fig. 18, negative electrode tab group 220 and negative electrode tab group 270 are folded such that tip portions 222, 272 face each other.

Each of negative electrode terminal 301 and current collector 430 is attached to sealing plate 120 with an insulating member being interposed therebetween. Current collector 430 is brought into abutment with current collector 410 in the X direction. The connecting of plate-shaped member 303 to negative electrode terminal 301 may be performed at any timing. Current collector 430 and current collector 410 are joined to each other by laser welding from between sealing plate 120 and insulating sheet 700.

Next, spacer 600 and electrode assembly 200 are inserted into case main body 110 via opening 113 with the current collector 420 side being inserted first (step S7). Negative electrode tab group 220 and negative electrode tab group 270 are curved by bringing sealing plate 120 close to the main body portion of electrode assembly 200 (first electrode assembly 201 and second electrode assembly 202) from the state in which negative electrode tab group 220 and negative electrode tab group 270 are extended (state shown in Fig. 11). Negative electrode tab group 220 and negative electrode tab group 270 are curved along the shape of spacer 600 such that the folded portions of curved portions 221, 271 are close to case main body 110 in the Y direction.

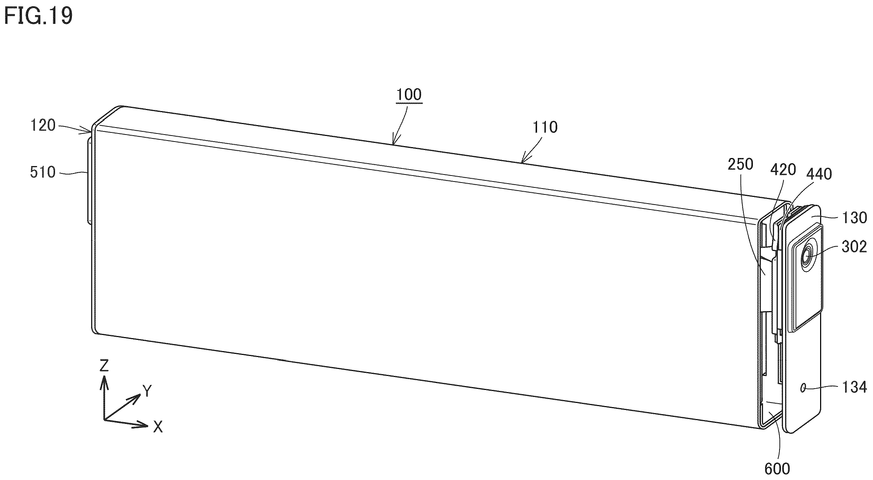

As shown in Fig. 19, after bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from the current collector 410 side. When electrode assembly 200 is pushed from the current collector 410 side, negative electrode tab group 220 and negative electrode tab group 270 can be curved at the same time.

After electrode assembly 200 is inserted into case main body 110, current collector 420 is electrically connected to positive electrode terminal 302 (step S8). Specifically, positive electrode terminal 302 is attached to sealing plate 130 with an insulating member being interposed therebetween. After inserting first electrode assembly 201 and second electrode assembly 202 into case main body 110, current collector 440 is brought into abutment, in the X direction, with current collector 420 protruding from opening 114. The connecting of plate-shaped member 304 to positive electrode terminal 302 may be performed at any timing.

Positive electrode tab group 250 and positive electrode tab group 280 connected to current collector 420 are folded such that tip portions 252, 282 face each other. As shown in Fig. 12, positive electrode tab group 250 and positive electrode tab group 280 are curved along the shape of spacer 600 such that the folded portions of curved portions 251, 281 are close to case main body 110 in the Y direction.

After spacer 600 and electrode assembly 200 are inserted into case main body 110, sealing plate 130 and sealing plate 120 are joined to case main body 110 (step S9).

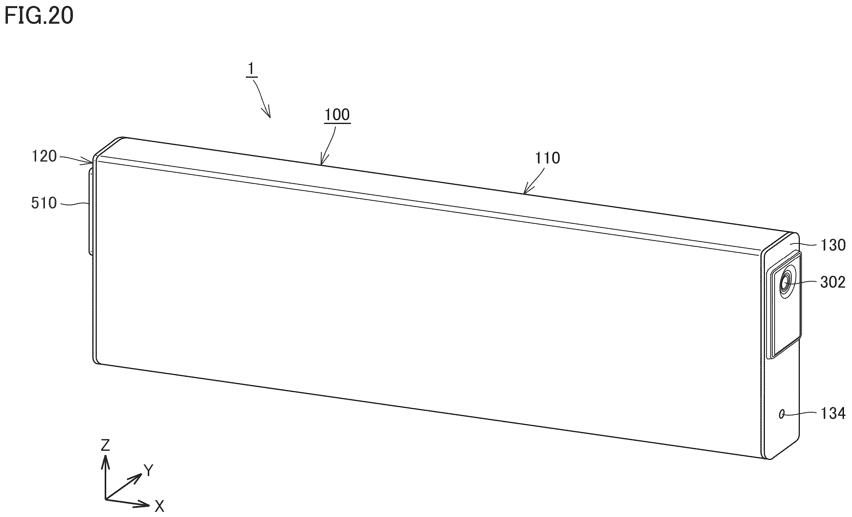

As shown in Fig. 20, after sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

Next, sealing plate 120 and sealing plate 130 are joined to case main body 110. Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S10). After the leakage inspection, secondary battery 1 is dried to remove moisture in case 100.

Next, the electrolyte solution is injected into case 100 via injection hole 134 provided in sealing plate 130 in a state in which sealing plate 130 is disposed on the upper side with respect to sealing plate 120 and spacer 600 is disposed on the lower side with respect to electrode assembly 200 in the vertical direction (step S11). Since spacer 600 is provided around the portion via which the electrolyte solution is injected, electrode assembly 200 or the like is suppressed from being damaged even when the electrolyte solution is vigorously injected into case 100. Thus, in secondary battery 1 according to the present embodiment, the electrolyte solution can be injected in a shorter period of time than that in a case where spacer 600 is not provided.
Thereafter, charging is performed to result in release of gas. For performing the charging to result in release of gas, injection hole 134 may be temporarily sealed. Thereafter, injection hole 134 is sealed, thereby completing secondary battery 1.

### (Connection between Electrode Tabs)

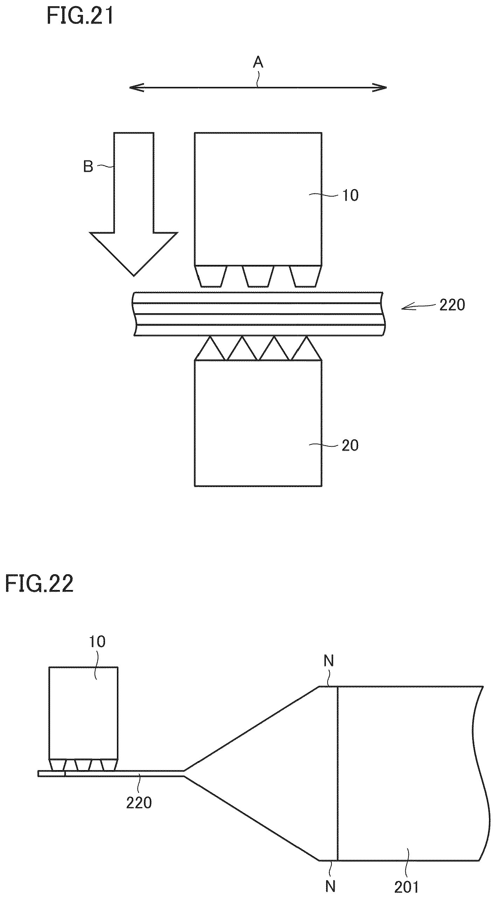

Next, joining between the electrode tabs in the electrode tab group will be described. As shown in Fig. 21, negative electrode tabs 230 (first electrode tabs) are joined together using a horn 10 and an anvil 20, thereby forming negative electrode tab group 220 (first electrode tab group). On this occasion, horn 10 is vibrated in a direction of arrow A while pressing negative electrode tab 230 in a direction of arrow B. It should be noted that Fig. 21 shows an example in which four tabs are stacked, but the number of the tabs stacked is preferably 5 or more, is more preferably 10 or more, and is further preferably 20 or more.

When forming a joining portion in negative electrode tab group 220 as shown in Fig. 22, horn 10 is preferably disposed at a position close to the tip of negative electrode tab group 220. Thus, when horn 10 is vibrated, a root of negative electrode tab 230 can be suppressed more effectively from being damaged due to application of excessive load to root N of the negative electrode tab (particularly, the root of negative electrode tab 230 located in the vicinity of the outermost portion in the stacking direction). For example, in the longest negative electrode tab 230 of negative electrode tab group 220, it is preferable to bring the whole of horn 10 into abutment with a region within 1/3 of the length of negative electrode tab 230 from the tip of negative electrode tab 230.

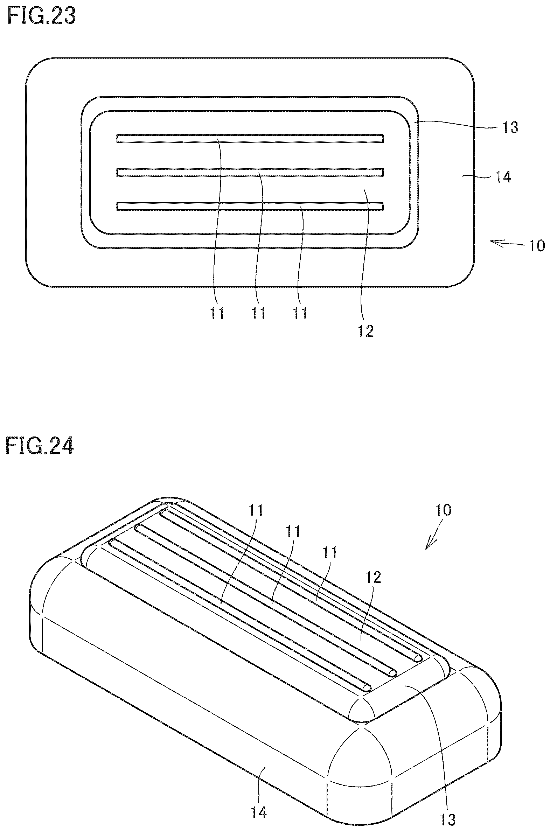

As shown in Figs. 23 and 24, horn 10 includes line-shaped protuberances 11 (first protuberances), a base surface 12, a projection 13, and a main body 14. The plurality of line-shaped protuberances 11 are formed to extend substantially parallel to each other (in substantially the same direction). Each of line-shaped protuberances 11 is preferably formed to have a straight line shape, but may have a curved line shape. When viewed in a plan view of line-shaped protuberance 11 (when viewed in a direction perpendicular to the base surface), a ratio (L/B) of a length L of protuberance 11 (length along the curved line in the case of the curved line shape) to a width B of protuberance 11 is preferably about 3 or more, is more preferably about 5 or more, and is further preferably about 10 or more.

It should be noted that regarding the manner in which the plurality of line-shaped protuberances 11 extend in substantially the same direction, the inclination of one line-shaped protuberance 11 with respect to the other line-shaped protuberances 11 is preferably ±15° or less, is more preferably ±10° or less, and is further preferably ±5° or less, for example.

Each of protuberances 11 is provided to protrude from base surface 12. The top portion of protuberance 11 extends in the form of a line. In an example of Figs. 23 and 24, the plurality of (three) protuberances 11 are provided, but the number of protuberances 11 can be appropriately changed. One protuberance 11 may be provided. Base surface 12 constitutes an upper surface of projection 13. In the example of Figs. 23 and 24, base surface 12 is a flat surface. Projection 13 is provided to protrude from main body 14. Projection 13 has a curved side surface, and is gradually decreased in length and width as further away from main body 14. It should be noted that the shape of projection 13 is not limited thereto.

In the step of forming the joining portion between negative electrode tabs 230, the vibration (for example, ultrasonic vibration) is applied in a state in which protuberances 11 are in abutment with negative electrode tab group 220. On this occasion, horn 10 is vibrated in a direction substantially orthogonal to (intersecting) the direction in which line-shaped protuberances 11 extend. Each of line-shaped protuberances 11 does not necessarily need to be substantially orthogonal to the vibration direction. Protuberance 11 preferably intersects the vibration direction at an angle of about 90°±30° or less, and more preferably at an angle of about 90°±15° or less.

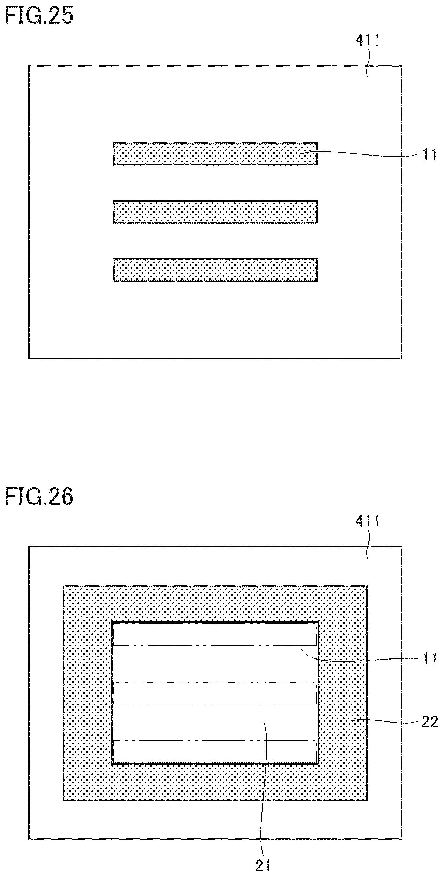

As shown in Fig. 25, line-shaped protuberances 11 of horn 10 are disposed in the vicinity of the center of joining location 411. As shown in Fig. 26, anvil 20 has a flat region 21 (first region) to face protuberance 11, and a protuberance formation region 22 (second region) provided around flat region 21. A plurality of protuberances (second protuberances) are formed in protuberance formation region 22. Each of the protuberances formed in protuberance formation region 22 of anvil 20 may not be a line-shaped protuberance, and may have, for example, a quadrangular pyramid shape having an aspect ratio (major axis length/minor axis length) smaller than 2 when viewed in a plan view (when viewed in a direction perpendicular to the surface to be in abutment with negative electrode tab group 220), a conical shape, a hemispherical shape, or the like. One protuberance (second protuberance) formed in protuberance formation region 22 of anvil 20 preferably has an area (area surrounded by the contour of the root of each protuberance when viewed along the protruding direction of the protuberance) smaller than that of one protuberance 11 (first protuberance) when viewed in a plan view (Fig. 26). For example, (the area of one second protuberance) / (the area of one first protuberance) is preferably about 0.5 or less, is more preferably about 0.3 or less, and is further preferably about 0.1 or less.

In flat region 21 of anvil 20, there may be fine irregularities such as those present in the surface of anvil 20 at its portion at which no protuberances or the like are formed. In flat region 21, for example, a protuberance having a height of about 0.03 mm or more is preferably not present, and a protuberance having a height of about 0.01 mm or more is more preferably not present.

As flat region 21 of anvil 20, for example, it is preferable to form a region including at least a region that is a quadrangular region of 3 mm × 5 mm and that has no protuberance (other than the above-described fine irregularities). It is more preferable to form a region that includes at least a quadrangular region of 3 mm × 8 mm with no protuberance.

The height of the protuberance (second protuberance) formed in protuberance formation region 22 of anvil 20 is preferably about 0.05 mm or more, is more preferably about 0.08 mm or more, and is further preferably about 0.1 mm or more, for example.

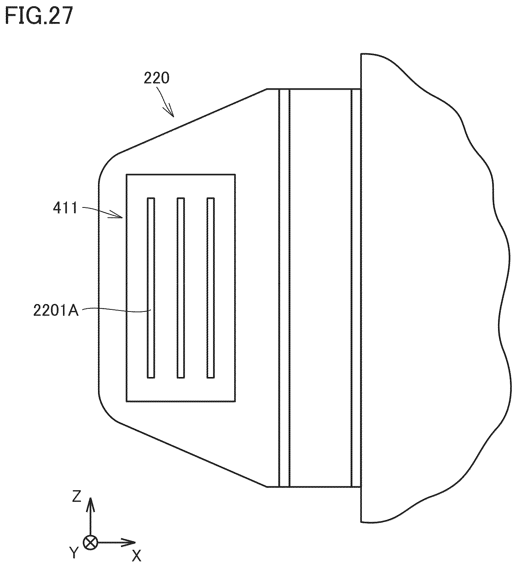

As shown in Fig. 27, recesses 2201A are formed in joining location 411 between negative electrode tab group 220 and current collector 410. Each of recesses 2201A is formed to extend in the direction (Z direction) orthogonal to the direction (X direction) in which negative electrode tab group 220 protrudes from the main body portion of electrode assembly 200. Recess 2201A is formed to extend in the height direction (Z direction) of electrode assembly 200.

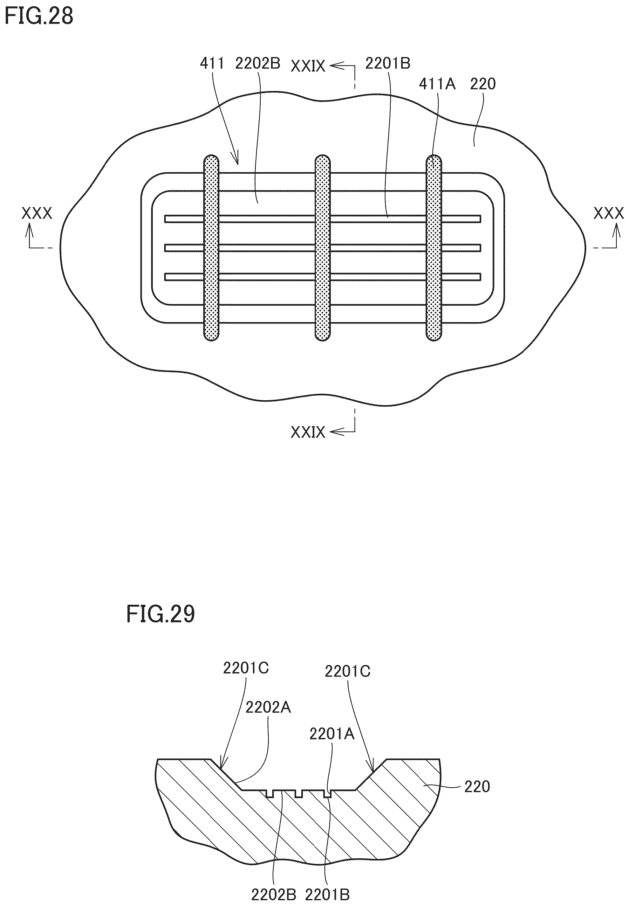

As shown in Figs. 28 to 30, in one outer surface (first outer surface) of negative electrode tab group 220, recess 2201A (first recess) serving as a pressing mark resulting from protuberance 11 and a recess 2202A (second recess) serving as a pressing mark resulting from projection 13 are formed.

Recess 2201A is formed in a bottom portion of recess 2202A. In a region 2201B (first joining region) in which recess 2201A is formed, negative electrode tabs 230 are joined together with relatively strong joining strength. In a region 2202B (second joining region) formed around region 2201B, negative electrode tabs 230 are joined together with joining strength relatively weaker than that in region 2201B. It should be noted that a region in which negative electrode tabs 230 are not joined together may be present in a part of region 2201B.

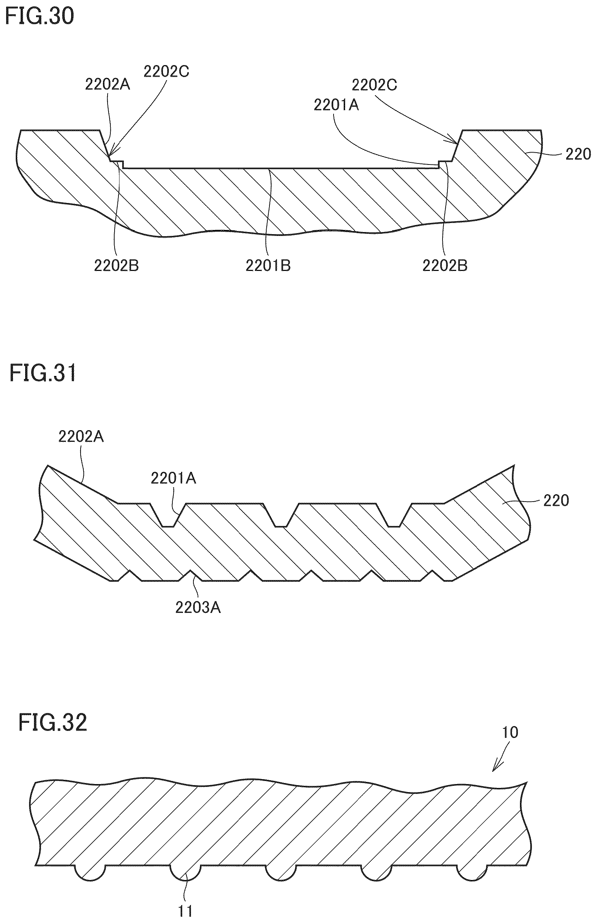

In an example shown in each of Figs. 29 and 30, a side wall of recess 2202A is inclined in a direction in which the width of recess 2202A is increased toward the opening side. The inclination (see Fig. 29) of a side wall 2201C (first side wall) extending in the same direction as line-shaped recess 2201A is gentler (the angle of intersection of recess 2202A with the bottom surface is smaller) than the inclination (see Fig. 30) of a side wall 2202C (second side wall) located at each of both ends of line-shaped recess 2201A. However, the inclinations of the side walls of recess 2202A is not limited to the above-described example.

After negative electrode tabs 230 are joined together, negative electrode tab group 220 is joined to current collector 410 (first conductive member). On this occasion, since current collector 410 is brought into abutment with the outer surface (second outer surface) of negative electrode tab group 220 located on the side opposite to the surface in which recess 2201A (region 2201B) serving as the pressing mark resulting from protuberance 11 is formed (rear side in the plane of sheet of Fig. 28), current collector 410 can be overlapped with the portion with which flat region 21 of anvil 20 was in abutment. In this state, negative electrode tab group 220 and current collector 410 are joined together by applying laser light (energy ray) from the recess 2201A side (front side in the plane of sheet of Fig. 28).

The laser light is macroscopically scanned in a direction substantially orthogonal to (intersecting) the extending direction of recess 2201A (region 2201B). Therefore, a laser welding portion 411A that joins negative electrode tab group 220 and current collector 410 extends in the direction substantially orthogonal to (intersecting) the extending direction of recess 2201A (region 2201B). It should be noted that when the laser light is used as the energy ray, the laser light may be of continuous wave type or may be of pulse type.

Since the extending direction of laser welding portion 411A intersects the extending direction of recess 2201A (region 2201B), it is possible to securely form a region in which laser welding portion 411A is overlapped with region 2201B of negative electrode tab group 220. Thus, region 2201B in which negative electrode tabs 230 are relatively firmly joined together in negative electrode tab group 220 can be more securely joined to current collector 410, thereby increasing reliability of the joining portion between negative electrode tab group 220 and current collector 410. Moreover, occurrence of necking at the time of the laser welding can be suppressed, thereby improving reliability of electrical connection between negative electrode tab group 220 and current collector 410.

The laser light for joining negative electrode tab group 220 and current collector 410 may be applied only to the bottom portion of recess 2202A, may be applied to the bottom portion and side wall portion of recess 2202A, or may reach a portion external to recess 2202A beyond the bottom portion and side wall portion of recess 2202A. It should be noted that when the laser light is also applied to the side wall portion of recess 2202A, the inclination (see Fig. 29) of side wall 2201C (first side wall) serving as a first portion of the side wall portion to which the laser light is applied is preferably gentler than the inclination of side wall 2202C (second side wall) (see Fig. 30) serving as a second portion to which no laser light is applied.

According to the step of joining in the present embodiment, the vibration can be applied while stably holding negative electrode tab group 220 by line-shaped protuberances 11 formed in horn 10, thereby improving reliability of the joining between negative electrode tabs 230. Moreover, damages of negative electrode tabs 230 can also be effectively suppressed. As a result, secondary battery 1 having high reliability can be obtained.

Moreover, according to the step of joining in the present embodiment, since anvil 20 is provided with flat region 21 that is to face protuberances 11 of horn 10 with negative electrode tab group 220 being interposed therebetween, current collector 410 can be overlapped with the portion with which flat region 21 was in abutment. Therefore, laser welding can be performed at a portion at which a clearance between negative electrode tab group 220 and current collector 410 is small, thereby effectively suppressing generation of a blowhole at the time of the welding. As a result, the reliability of the joining between negative electrode tab group 220 and current collector 410 can be improved. As a result, secondary battery 1 having high reliability can be obtained. However, in the present technology, flat region 21 (first region) of anvil 20 does not necessarily need to be provided.

In the above-described example, it has been illustratively described that line-shaped protuberances 11 are formed in horn 10 and flat region 21 is formed in anvil 20; however, the scope of the present technology is not limited thereto, and the line-shaped protuberances may be formed in anvil 20 and the flat region to face the line-shaped protuberances may be provided in horn 10, for example.

### (Modification)

In a modification shown in Fig. 31, the position of flat region 21 and the position of protuberance formation region 22 of anvil 20 are replaced with each other, with the result that a recess 2203A (third recess) serving as a pressing mark resulting from the protuberance of the anvil is formed in the lower surface (second outer surface) of a region facing recess 2201A (first recess) formed in the upper surface (first outer surface).

As illustrated in Fig. 31, the depth of recess 2201A (pressing mark resulting from each protuberance of the horn) is preferably larger than the depth of recess 2203A (pressing mark resulting from each protuberance of the anvil). The opening width of recess 2201A (pressing mark resulting from the protuberance of the horn) is preferably wider than the opening width of recess 2203A (pressing mark resulting from the protuberance of the anvil). Moreover, it is preferable that the number of recesses 2201A (pressing marks resulting from the protuberances of the horn) is smaller than the number of recesses 2203 A (pressing marks resulting from the protuberances of the anvil). Thus, one recess 2201A becomes relatively large, with the result that the energy ray can be securely applied to recess 2201A. Moreover, the clearance between negative electrode tab group 220 and current collector 410 is made small, with the result that negative electrode tab group 220 and current collector 410 can be more stably joined to each other.

In the above-described example (Fig. 26), it has been illustratively described that protuberance formation region 22 of anvil 20 is formed to have a loop shape so as to surround flat region 21. With this, it is possible to effectively suppress displacement of the foils of negative electrode tabs 230 during the ultrasonic vibration of horn 10, thereby forming a stable joining portion between negative electrode tabs 230. However, the arrangements of flat region 21 and protuberance formation region 22 in anvil 20 are not limited to those described above.

In anvil 20 shown in Fig. 26, protuberances may be provided in flat region 21 (first region). In this case, a ratio of an area occupied by the protuberances per area in flat region 21 is preferably smaller than a ratio of an area occupied by the protuberances per area in protuberance formation region 22. For example, a value of (the total area occupied by the protuberances formed in flat region 21 / the area of flat region 21) / (the total area occupied by the protuberances formed in protuberance formation region 22 / the area of protuberance formation region 22) is preferably about 0.5 or less, is more preferably about 0.3 or less, and is further preferably about 0.1 or less.

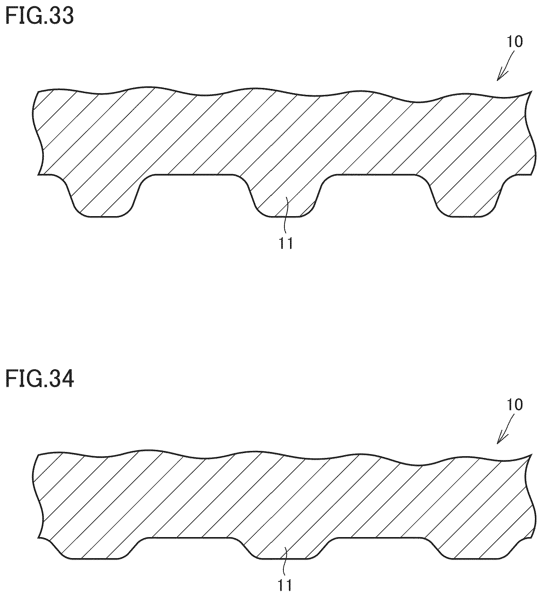

As shown in Figs. 32 to 34, the cross sectional shape of each of line-shaped protuberances 11 and an interval between the plurality of protuberances 11 can be appropriately changed. Each of protuberances 11 may have a cross section having a semicircular shape as in the example of Fig. 32, or may have a cross section having an inverted trapezoid shape (having corners each processed to have a curvature) as in the example of each of Figs. 33 and 34. As shown in Fig. 32, the tip of protuberance 11 preferably has a curved surface. Further, as shown in each of Figs. 33 and 34, the tip of protuberance 11 preferably has a flat surface. However, the shape of the tip of protuberance 11 is not limited thereto.

The width of protuberance 11 is preferably about 0.05 mm or more, and is more preferably about 0.1 mm or more. The length of protuberance 11 is preferably about 3 mm or more, is more preferably about 5 mm or more, and is further preferably about 10 mm or more. The height of protuberance 11 is preferably about 0.1 mm or more, and is preferably higher than the height of the protuberance provided in anvil 20. The height of protuberance 11 is more preferably about 1/3 of the total thickness of negative electrode tab group 220 formed.

In the above-described example, for convenience of explanation, the joining between negative electrode tab group 220 and current collector 410 has been described; however, in the case of using electrode assembly 200 in which first electrode assembly 201 and second electrode assembly 202 are stacked, negative electrode tab groups 220, 270 are stacked on current collector 410 and negative electrode tab groups 220, 270 and current collector 410 are then joined. Moreover, the joining of positive electrode tab groups 250, 280 is also the same as the joining of negative electrode tab groups 220, 270.

In the example described above, it has been illustratively described that negative electrode tab group 220 is joined to current collector 410, and then current collector 410 is joined to current collector 430 attached to sealing plate 120; however, negative electrode tab group 220 may be directly joined to current collector 430 attached to sealing plate 120 (current collector 410 is omitted). Thus, current collector 410 can be omitted, thereby attaining reduced internal resistance or increased energy density. In this case, after negative electrode tab group 220 and negative electrode tab group 270 are joined to current collector 430 attached to sealing plate 120, negative electrode tab group 220 and negative electrode tab group 270 are preferably bent to overlap first electrode assembly 201 and second electrode assembly 202. In this way, higher energy density can be attained.

Each of negative electrode tab 230 and positive electrode tab 260 is preferably a metal foil. Negative electrode tab 230 is preferably composed of a copper foil or a copper alloy foil. Positive electrode tab 260 is preferably composed of an aluminum foil or an aluminum alloy foil.

The thickness of each of one negative electrode tab 230 and one positive electrode tab 260 is preferably about 3 µm or more, and is more preferably about 5 µm or more. The thickness of each of one negative electrode tab 230 and one positive electrode tab 260 is preferably about 50 µm or less, is more preferably about 30 µm or less, and is further preferably about 20 µm or less.

The electrode tab and the current collector to be joined together are preferably composed of the same material. When negative electrode tab 230 is composed of copper or a copper alloy, current collector 410 to be joined to negative electrode tab 230 is also preferably composed of copper or a copper alloy. When positive electrode tab 260 is composed of aluminum or an aluminum alloy, current collector 420 to which the positive electrode tab is to be joined is also preferably composed of aluminum or an aluminum alloy.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a power storage device, the power storage device including an electrode assembly (200) including a first electrode (210) and a second electrode (240), the electrode assembly (200) having a first electrode tab group (220) in which a plurality of first electrode tabs (230) each connected to the first electrode (210) are stacked, the method comprising:
producing the electrode assembly (200) having the first electrode tab group (220); and
forming a joining portion at which the first electrode tabs (230) in the first electrode tab group (220) are joined together by applying vibration to the first electrode tab group (220) by a horn (10) in a state in which the first electrode tab group (220) is sandwiched between the horn (10) and an anvil (20) in a stacking direction of the first electrode tabs (230), wherein
a line-shaped protuberance (11) is provided in a surface of one of the horn (10) and the anvil (20), the surface being to be in abutment with a first outer surface of the first electrode tab group (220), and
in the forming the joining portion, the vibration is applied in a state in which the line-shaped protuberance (11) is in abutment with the first outer surface of the first electrode tab group (220).

2. The method of manufacturing the power storage device according to claim 1, wherein the line-shaped protuberance (11) is provided in the horn (10).

3. The method of manufacturing the power storage device according to claim 1 or 2, wherein in the forming the joining portion, the horn (10) is vibrated in a direction intersecting a direction in which the line-shaped protuberance (11) extends.

4. The method of manufacturing the power storage device according to any one of claims 1 to 3, wherein the line-shaped protuberance (11) includes a plurality of protuberances extending in substantially the same direction.

5. The method of manufacturing the power storage device according to any one of claims 1 to 4, wherein the joining portion includes a first joining region (2201B) formed in a region with which the line-shaped protuberance (11) is to be in abutment, and a second joining region (2202B) formed around the first joining region (2201B).

6. The method of manufacturing the power storage device according to any one of claims 1 to 5, wherein
the forming the joining portion includes forming a first recess (2201A) and a second recess (2202A) in the first outer surface of the first electrode tab group (220), and
the first recess (2201A) is a pressing mark resulting from the line-shaped protuberance (11), and the first recess (2201A) is formed in a bottom portion of the second recess (2202A).

7. The method of manufacturing the power storage device according to any one of claims 1 to 6, further comprising: after the forming the joining portion, joining the joining portion in the first electrode tab group (220) and a first conductive member (410) to each other.

8. The method of manufacturing the power storage device according to claim 7, wherein
the first electrode tab group (220) has a second outer surface located opposite to the first outer surface, and
the joining portion in the first electrode tab group (220) and the first conductive member (410) are joined to each other by applying an energy ray from the first outer surface side to the joining portion in a state in which the first conductive member (410) is in abutment with the second outer surface.

9. The method of manufacturing the power storage device according to claim 8, wherein the energy ray is scanned in a direction intersecting a direction in which a pressing mark resulting from the line-shaped protuberance (11) extends.

10. A power storage device comprising:
an electrode assembly (200) including a first electrode (210) and a second electrode (240); and
a first conductive member (410) electrically connected to the electrode assembly (200), wherein
the electrode assembly (200) includes a first electrode tab group (220) in which a plurality of first electrode tabs (230) each connected to the first electrode (210) are stacked,
the first electrode tab group (220) includes a first outer surface and a second outer surface located opposite to each other,
a first recess (2201A) having a line shape is formed in the first outer surface,
the first conductive member (410) is joined to the second outer surface,
the first electrode tab group (220) has a joining portion at which the first electrode tabs (230) are joined together, and
the first recess (2201A) is formed in the joining portion.

11. The power storage device according to claim 10, wherein a plurality of the first recesses (2201A) are formed to extend in substantially the same direction.

12. The power storage device according to claim 10 or 11, wherein the joining portion includes a first joining region (2201B) in which the first recess (2201A) is formed, and a second joining region (2202B) formed around the first joining region (2201B).

13. The power storage device according to any one of claims 10 to 12, wherein
a second recess (2202A) is formed in the first outer surface of the first electrode tab group (220), and
the first recess (2201A) is formed in a bottom portion of the second recess (2202A).
